# EUROPEAN PATENT APPLICATION

(11) **EP 2 866 211 A1**
(43) Date of publication of application: **29.04.2015**
(21) Application number: 14190160.3
(22) Date of filing: 23.10.2014
(51) Int. Cl.: G07F 17/32, G07F 17/34

(54) **Gaming machine with precursor and supplementary symbol set feature**

(30) Priority: 23.10.2013 GB 201318759
(71) Applicant: Pridefield Limited, Douglas IM99 1RZ (GB)
(72) Inventor: Igesund, Terence, Prestonsale 4021 (ZA)
(74) Representative: Butler, Michael John

(57) **Abstract**

A machine (100) includes a display (110), a processor (112), and a computer readable medium storing program instructions, that when executed by the processor (112), cause a set of functions to be performed. The set of functions includes making a determination that a trigger event occurred; responsive to making the determination, (i) selecting a precursor symbol set (500) from a precursor symbol group, and (ii) for the or each symbol in the selected precursor symbol set (500), randomly determining a corresponding arrangement position; displaying on the display (110) the selected precursor symbol set (500) by displaying the or each symbol in the selected precursor symbol set (500) in the corresponding arrangement position for that symbol; selecting a supplementary symbol set (600) from a supplementary symbol group; for the or each symbol in the selected supplementary symbol set (600), determining a corresponding arrangement position; and after displaying the selected precursor symbol set (500), displaying on the display (110) (i) the selected precursor symbol set (500), and (ii) the supplementary symbol set (600) by displaying the or each symbol in the selected supplementary symbol set (600) in the corresponding arrangement position for that symbol.

## Description

This disclosure relates to gaming machines for playing games such as wager games.

Wager games come in a variety of forms, including for example a mechanical slot machine. A mechanical slot machine may include one or more reels, each of which includes multiple symbols distributed around the circumference of the reel. When a player places a wager (e.g., by placing a coin in the machine), the player is allowed to spin the reels. Each reel then comes to rest, typically with either one of the symbols, or a space in between symbols, in alignment with a pay line. A predetermined winning symbol or a predetermined combination of winning symbols that are aligned with the pay line may result in the player winning the game and receiving a payout. In one example, the machine may include three reels, and the pay line may be a horizontal line disposed across a center of each of the three reels.

In another example of a wager game, a mechanical slot machine may present symbols in a matrix arrangement, with each symbol changing during a spin of the game. For example, the machine may have five columns and three rows of symbols, for a total of fifteen symbols. Such machines often have multiple pay lines, each being defined by a collection of positions within the matrix. For example, the machine may have three pay lines, each corresponding to one row of the matrix.

While slot machines were traditionally mechanical, modern slot machines often take the form of a video gaming machine (e.g., a dedicated gaming machine located in a casino) that includes a graphical user interface (GUI), and that may emulate a mechanical slot machine. With a video gaming machine, the GUI may include a display that displays an image of one or more reels or a matrix as described above, together with animation effects to simulate a spin of the game. A computer software program, which may reside in the video gaming machine, may randomly select one or more symbols in response to a spin, and may display the result on the display.

A modern slot machine may also be played over a computer network, such as by a player using a client machine that is connected to a server machine over the computer network. In this instance, the server machine may perform the spins of the game and may send the resulting symbols to the client machine for display.

Viewed from one aspect, the disclosure provides a gaming machine for playing a game in which symbols are selected and/or displayed by the machine, the machine comprising means for selecting symbols and means for displaying symbols characterised in that the machine is configured to carry out the following functions: making a determination that a trigger event occurred; responsive to making the determination, (i) selecting a precursor symbol set from a precursor symbol group, and (ii) for the or each symbol in the selected precursor symbol set, randomly determining a corresponding arrangement position; displaying on the display the selected precursor symbol set by displaying the or each symbol in the selected precursor symbol set in the corresponding arrangement position for that symbol; selecting a supplementary symbol set from a supplementary symbol group; for the or each symbol in the selected supplementary symbol set, determining a corresponding arrangement position; and after displaying the selected precursor symbol set, displaying on the display (i) the selected precursor symbol set, and (ii) the supplementary symbol set by displaying the or each symbol in the selected supplementary symbol set in the corresponding arrangement position for that symbol.

The machine may further be configured for receiving a play request via a user interface. In this instance, the machine may make the determination in response to receiving the play request.

In some embodiments, the trigger event comprises a randomly occurring event. For instance, the trigger event may involve the machine selecting a particular trigger symbol, such as in connection with a previous play of the game.

The precursor symbol group may comprise one or more symbols. Likewise, the supplementary symbol group may comprise one or more symbols. Further, the precursor symbol group may be a proper subset of the supplementary symbol group. Alternatively, the precursor group and the supplementary group may be the same group.

In some embodiments, the or each symbol in the precursor symbol group corresponds with a respective number from a set of numbers, and selecting the precursor symbol set from the precursor symbol group comprises using a random number generator to select numbers from the set of numbers to select symbols corresponding with the selected numbers.

Likewise, In some embodiments, the or each symbol in the supplementary symbol group corresponds with a respective number from a set of numbers, and selecting the supplementary symbol set from the supplementary symbol group comprises using a random number generator to select numbers from the set of numbers to select symbols corresponding with the selected numbers.

Selecting the precursor symbol set may occur before selecting the supplementary symbol set. Alternatively, selecting the precursor symbol may occur after selecting the supplementary symbol set.

There may be a plurality of instances of the same symbol in the selected precursor symbol set and/or in the selected supplementary symbol set.

In some embodiments, selecting the precursor symbol set from the precursor symbol group comprises determining a quantity of symbols in the precursor symbol set. Likewise, selecting the supplementary symbol set from the supplementary symbol group comprises determining a quantity of symbols in the supplementary symbol set.

In some embodiments, each symbol in the selected precursor symbol set corresponds with a respective arrangement position in an arrangement. Likewise, each symbol in the selected supplementary symbol set corresponds with a respective arrangement position in the arrangement.

The arrangement may be a column-and-row arrangement. For instance, the arrangement may be a five column and four row arrangement, thereby defining a total of twenty arrangement positions. In this instance, a combined quantity of symbols in the selected precursor symbol set and the selected supplementary symbol set may also be twenty symbols such that each symbol has a corresponding arrangement position in the arrangement.

In some embodiments, determining the quantity of symbols in the precursor symbol set comprises determining the number of rows in the column-and-row arrangement. For example, where the arrangement has four rows, the precursor symbol set may have four symbols (i.e., one for each row).

In some embodiments, determining the quantity of symbols in the supplementary symbol set comprises subtracting the quantity of symbols in the selected precursor symbol set from the quantity of arrangement positions in the column-and-row arrangement. For example, where the arrangement has twenty positions and the precursor symbol set has four symbols, the supplementary symbol set may have sixteen symbols.

In some embodiments, displaying the selected precursor symbol set comprises displaying the or each symbol from the selected precursor symbol set in the corresponding arrangement position for that symbol, and displaying the selected supplementary symbol set comprises displaying the or each symbol from the selected supplementary symbol set in the corresponding arrangement position for that symbol.

The machine may further be configured for displaying on the display an indication of the or each symbol in the precursor symbol set, and/or the or each symbol in the supplementary symbol set.

In some embodiments, the or each symbol in the selected precursor symbol set corresponds with a respective displayable image. In such embodiments, displaying the selected precursor symbol set may involve for the or each symbol of the selected precursor symbol set, displaying a corresponding displayable image.

Likewise, in some embodiments, the or each symbol in the selected supplementary symbol set may correspond with a respective displayable image. In such embodiments, displaying the selected supplementary symbol set may involve for the or each symbol of the selected supplementary symbol set, displaying a corresponding displayable image.

In some embodiments, the selected supplementary symbol set includes multiple sub-sets, and the supplementary symbol group includes multiple sub-groups, wherein each sub-set corresponds to a respective one of the sub-groups, and wherein selecting the supplementary symbol set from the supplementary symbol group comprises selecting each sub-set from the corresponding sub-group.

In some embodiments, displaying the supplementary symbol set comprises superimposing each sub-set over a corresponding reel.

In some embodiments, the game may be a wager game and the machine may be further configured for receiving a wager via a user interface; determining, using a stored payout table, a payout amount; and displaying on the display the determined payout amount. The payout amount may be a function of the received wager, the selected precursor symbol set, the selected supplementary symbol set, the arrangements corresponding with the selected precursor symbol set and/or the arrangements corresponding with the selected supplementary symbol set.

The machine may be in the form of a stand alone gaming machine which incorporates a data processing module and a display. Alternatively, the machine may comprise a server machine and a client machine which incorporates a data processing module and a display, the server machine and the client machine being remote from each other.

Viewed from a second aspect, the disclosure provides a method for playing a game in which symbols are selected and/or displayed, the method comprising: making a determination that a trigger event occurred; responsive to making the determination, (i) selecting a precursor symbol set from a precursor symbol group, and (ii) for the or each symbol in the selected precursor symbol set, randomly determining a corresponding arrangement position; displaying on a display the selected precursor symbol set by displaying the or each symbol in the selected precursor symbol set in the corresponding arrangement position for that symbol; selecting a supplementary symbol set from a supplementary symbol group; for the or each symbol in the selected supplementary symbol set, determining a corresponding arrangement position; and after displaying the selected precursor symbol set, displaying on the display (i) the selected precursor symbol set, and (ii) the supplementary symbol set by displaying the or each symbol in the selected supplementary symbol set in the corresponding arrangement position for that symbol

Viewed from a third aspect, the disclosure provides a server machine for use in playing a game in which symbols are selected and/or displayed, the server machine being configured to communicate with a client machine over a computer network, and the server machine comprising a processor and a computer-readable medium storing software instructions, that when executed by the processor, perform functions on the server machine comprising: making a determination that a trigger event occurred; responsive to making the determination, (i) selecting a precursor symbol set from a precursor symbol group, and (ii) for the or each symbol in the selected precursor symbol set, randomly determining a corresponding arrangement position; selecting a supplementary symbol set from a supplementary symbol group; for the or each symbol in the selected supplementary symbol set, determining a corresponding arrangement position; sending to a client machine for display a first set of data identifying (i) the selected precursor symbol set and (ii) the determined corresponding arrangement positions for the or each symbol in the selected precursor symbol set; and sending to the client machine for display a second set of data identifying (i) the selected supplementary symbol set, and (ii) the determined corresponding arrangement positions for the or each symbol in the selected supplementary symbol set.

Viewed from a fourth aspect, the disclosure provides a client machine for playing a game in which symbols are selected and/or displayed, the client machine being in communication with a server machine and comprising: a display configured to display symbols; a processor; and a computer-readable medium storing software instructions, that when executed by the processor, perform functions on the client machine, the functions comprising: receiving from the server machine a first set of data identifying (i) a precursor symbol set selected from a precursor symbol group, and (ii) for the or each symbol in the selected precursor symbol set, a corresponding arrangement position; receiving from the server machine a second set of data identifying (i) a supplementary symbol set selected from a supplementary symbol group; and (ii) for the or each symbol in the selected supplementary symbol set, a corresponding arrangement position; displaying on the display the identified precursor symbol set by displaying the or each symbol in the identified precursor symbol set in the identified corresponding arrangement position for that symbol; and after displaying the identified precursor symbol set, displaying on the display (i) the identified precursor symbol set, and (ii) the identified supplementary symbol set by displaying the or each symbol in the identified supplementary symbol set in the identified corresponding arrangement position for that symbol.

Viewed from a fifth aspect, the disclosure provides a computer software product for configuring a data processing system for playing a game in which symbols are selected and/or displayed, the software product comprising instructions, that when executed by a processor of the data processing system will cause the data processing system to carry out the following functions: making a determination that a trigger event occurred; responsive to making the determination, (i) selecting a precursor symbol set from a precursor symbol group, and (ii) for the or each symbol in the selected precursor symbol set, randomly determining a corresponding arrangement position; displaying on a display the selected precursor symbol set by displaying the or each symbol in the selected precursor symbol set in the corresponding arrangement position for that symbol; selecting a supplementary symbol set from a supplementary symbol group; for the or each symbol in the selected supplementary symbol set, determining a corresponding arrangement position; and after displaying the selected precursor symbol set, displaying on the display (i) the selected precursor symbol set, and (ii) the supplementary symbol set by displaying the or each symbol in the selected supplementary symbol set in the corresponding arrangement position for that symbol.

The features listed above as being features of embodiments of the first aspect of the disclosure, are equally applicable to embodiments of the second, third, fourth and fifth embodiments of the disclosure.

In embodiments of the disclosure in which a computer software product is used, the product may be non-transitory and store instructions on physical media such as a DVD, or a solid state drive, or a hard drive. Alternatively, the product may be transitory and in the form of instructions provided over a connection such as a network connection which is linked to a network such as the Internet.

Disclosed herein are machines and methods for playing games such as wager games. In one aspect, a machine is disclosed that includes a display configured to display symbols in a game, a processor, and a non-transitory computer-readable medium storing software program instructions, that when executed by the processor, cause a set of functions to be performed. The set of functions includes: making a determination that a trigger event occurred; responsive to making the determination, (i) selecting a precursor symbol set from a precursor symbol group, and (ii) for the or each symbol in the selected precursor symbol set, randomly determining a corresponding arrangement position; displaying on the display the selected precursor symbol set by displaying the or each symbol in the selected precursor symbol set in the corresponding arrangement position for that symbol; selecting a supplementary symbol set from a supplementary symbol group; for the or each symbol in the selected supplementary symbol set, determining a corresponding arrangement position; and after displaying the selected precursor symbol set, displaying on the display (i) the selected precursor symbol set, and (ii) the supplementary symbol set by displaying the or each symbol in the selected supplementary symbol set in the corresponding arrangement position for that symbol.

In another aspect, a method for use with a display configured to display symbols in a game is disclosed. The method involves: making, using a processor, a determination that a trigger event occurred; responsive to making the determination, (i) selecting a precursor symbol set from a precursor symbol group, and (ii) for the or each symbol in the selected precursor symbol set, randomly determining a corresponding arrangement position; displaying on a display the selected precursor symbol set by displaying the or each symbol in the selected precursor symbol set in the corresponding arrangement position for that symbol; selecting a supplementary symbol set from a supplementary symbol group; for the or each symbol in the selected supplementary symbol set, determining a corresponding arrangement position; and after displaying the selected precursor symbol set, displaying on the display (i) the selected precursor symbol set, and (ii) the supplementary symbol set by displaying the or each symbol in the selected supplementary symbol set in the corresponding arrangement position for that symbol.

In another aspect, a server machine is disclosed. The server machine is configured to communicate with a client machine over a computer-network, the client machine including a display configured to display symbols in a game. The server machine includes a processor and a non-transitory computer-readable medium storing software instructions, that when executed by the processor, perform a set of functions. The set of functions includes: making a determination that a trigger event occurred; responsive to making the determination, (i) selecting a precursor symbol set from a precursor symbol group, and (ii) for the or each symbol in the selected precursor symbol set, randomly determining a corresponding arrangement position; selecting a supplementary symbol set from a supplementary symbol group; for the or each symbol in the selected supplementary symbol set, determining a corresponding arrangement position; sending to a client machine for display a first set of data identifying (i) the selected precursor symbol set and (ii) the determined corresponding arrangement positions for the or each symbol in the selected precursor symbol set; and sending to the client machine for display a second set of data identifying (i) the selected supplementary symbol set, and (ii) the determined corresponding arrangement positions for the or each symbol in the selected supplementary symbol set.

In another aspect, a client machine is disclosed. The client machine is configured to communicate with a server machine over a computer network. The client machine includes a display configured to display symbols of a game, a processor, and a non-transitory computer-readable medium storing software instructions, that when executed by the processor, perform a set of functions. The set of functions includes: receiving from the server machine a first set of data identifying (i) a precursor symbol set selected from a precursor symbol group, and (ii) for the or each symbol in the selected precursor symbol set, a corresponding arrangement position; receiving from the server machine a second set of data identifying (i) a supplementary symbol set selected from a supplementary symbol group; and (ii) for the or each symbol in the selected supplementary symbol set, a corresponding arrangement position; displaying on the display the identified precursor symbol set by displaying the or each symbol in the identified precursor symbol set in the identified corresponding arrangement position for that symbol; and after displaying the identified precursor symbol set, displaying on the display (i) the identified precursor symbol set, and (ii) the identified supplementary symbol set by displaying the or each symbol in the identified supplementary symbol set in the identified corresponding arrangement position for that symbol.

Some embodiments of the disclosure will now be described by way of example and with reference to the accompanying drawings, in which:
Figure 1 is a simplified block diagram of an embodiment of a machine in accordance with the disclosure;
Figure 2 is a simplified block diagram of an example server machine connected to an example client machine over a computer-network, in an embodiment of the disclosure;
Figure 3A is a first part of a flow chart showing functions in accordance with a method in an embodiment of the disclosure;
Figure 3B is a second part of the flow chart of Figure 3A;
Figure 3C is a third part of the flow chart of Figure 3A;
Figure 4A includes diagrams of tables used in accordance with machines and methods in embodiments of the disclosure;
Figure 4B includes additional diagrams of tables used in accordance with machines and methods in embodiments of the disclosure;
Figure 5 depicts a first state of a display in accordance with an embodiment of a machine and method in accordance with the disclosure;
Figure 6 depicts a second state of a display in accordance with an embodiment machine and method in accordance with the disclosure;
Figure 7A is a first part of a flow chart showing functions in accordance with another method in an embodiment of the disclosure, in connection with an example server machine;
Figure 7B is a second part of the flow chart of Figure 7A;
Figure 8A is a first part of a flow chart showing functions in accordance with another method in an embodiment of the disclosure, in connection with an example client machine; and
Figure 8B is a second part of the flow chart of Figure 8A.

Throughout this disclosure, any reference to "a" or "an" refers to "at least one," and any reference to "the" refers to "the at least one," unless otherwise specified, or unless the context clearly dictates otherwise.

Disclosed herein are machines and methods for playing games such as wager games. In one aspect, the machines and methods provide a feature that may enhance traditional wager games (e.g., slot machines or other reel-type games) by providing a player with additional opportunities to win the game, thereby increasing the player's interest, anticipation, and excitement in connection with the game. This may in turn benefit a casino or another entity that provides a game with this feature. Indeed, wager games are typically configured to have odds that favor the casino (sometimes referred to as the "house"). Accordingly, based on the law of averages, casinos often maximize their profits simply by getting more players to play more games. Due to the provided feature, players may be drawn in (e.g., from competing casinos that lack games with such a feature) and they may play the game often.

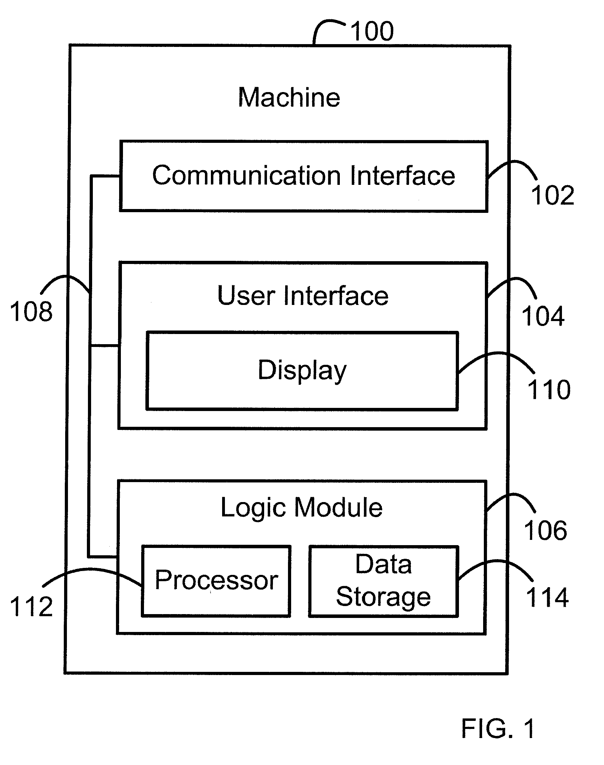

Figure 1 shows a simplified block diagram of an example machine 100 arranged to implement functions in accordance with example methods described herein. The machine 100 may take any of a variety of forms, including for example a dedicated gaming machine, personal computer, personal digital assistant, mobile phone, tablet device, or other computing device.

The machine 100 may include a communication interface 102, a user interface 104, and a logic module 106, all of which may be coupled together by a system bus, network, or other connection mechanism 108. The communication interface 102 may include a wired or wireless network communication interface.

The user interface 104 may facilitate interaction with a user (e.g., a player of a game) if applicable. As such, the user interface 104 may take the form of a GUI and may include output components such as a speaker and a display 110, and input components such as a keypad or a touch-sensitive screen. As described in greater detail below, the display 110 may be configured to display, among other things, a symbol set in a game.

The logic module 106 may take the form of a processor 112 and a data storage 114. The processor 114 may include a general-purpose processor (e.g., a microprocessor) and/or a special-purpose processor (e.g., a digital signal processor and/or application specific integrated circuit) and may be integrated in whole or in part with the communication interface 102 and/or the user interface 104.

The data storage 114 may include volatile and/or non-volatile storage components and may be integrated in whole or in part with the processor 112. The data storage 114 may take the form of a non-transitory computer-readable medium and may include software program instructions, that when executed by the processor 114, cause the machine 100 to perform one or more of the functions described herein.

The data storage 114 may also include operating system software on which the machine 100 may operate. For example, the machine 100 may operate on a Windows™-based operating system (e.g., Windows XP or Windows 7) provided by the Microsoft™ Corporation of Redmond, Washington.

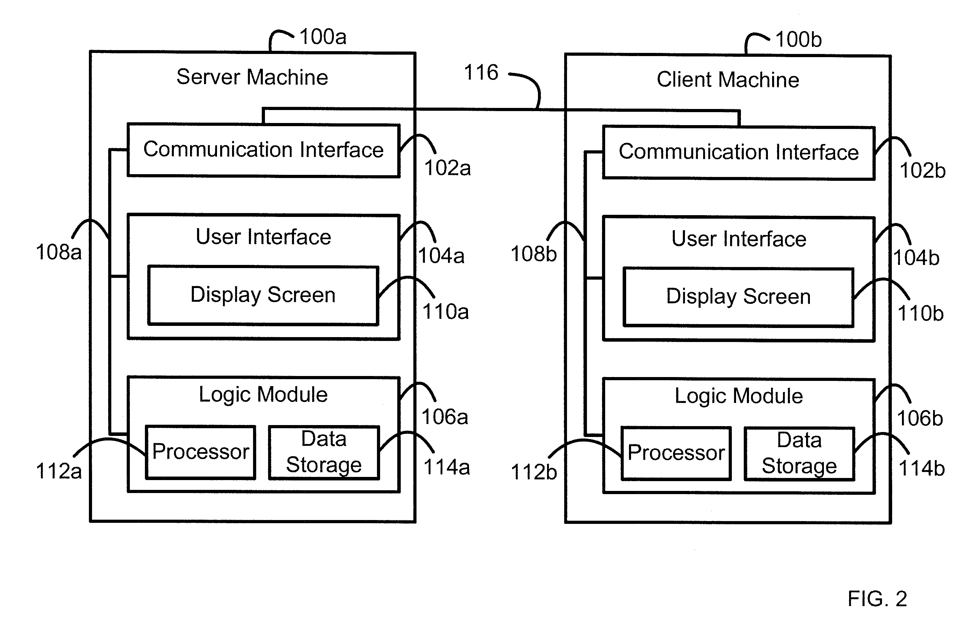

Figure 2 is a simplified block diagram of an example server machine 100a connected to an example client machine (sometimes referred to as a workstation) 100b over a computer-network 116. The components of the server machine 100a and the client machine 100b are shown with corresponding "a" and ""b" reference numerals (i.e., based on the machine 100). The server machine 100a is configured to communicate with the client machine 100b over the computer network 116 (via the communication interfaces 102a, 102b). Likewise, the client machine 100b is configured to communicate with the server machine 100a over the computer network 116. In such server-client based configurations, the server machine 100a and/or the client machine 100b may perform one or more of the functions described herein.

The computer network based server-client configuration described above may take a variety of forms. For example, the computer-network 116 may be a local area network (LAN) in a casino, such that client machines 100b dispersed throughout the casino may communicate with the server machine 100a in the casino.

In another example, the computer-network 116 may be a wide area network (WAN), such as an Internet network. In such a configuration, the client machines 100b may communicate with the server machine 100a via a website portal (for a virtual casino) hosted on the server machine 100a.

The computer-network 116 may include any of a variety of network topologies and network devices, and may employ traditional network-related technologies, including for example the public switched telephone network, cable networks, cellular wireless networks, WiFi, and WiMax. Further, the computer network may include one or more databases (e.g., a player credit account database), to allow for the storing and retrieving of data related to the game.

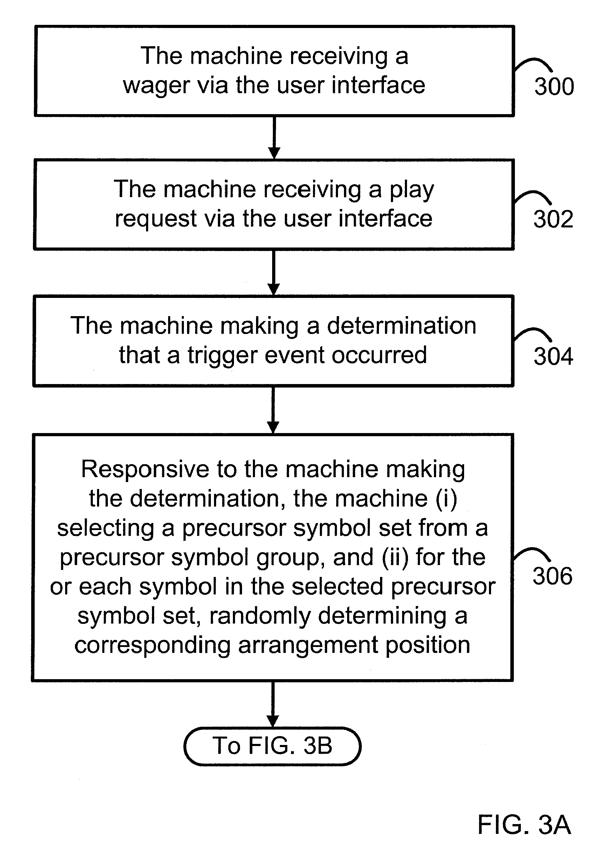

Figures 3A-3C show a flow chart showing functions in accordance with an example method in connection with the machine 100. The example method relates to a wager game.

At block 300, the method may involve the machine 100 receiving a wager via the user interface 104. In one example, this may allow a player to enter a wager of the wager game on a keypad on the machine 100. In one example, a player may have a corresponding player credit balance from which the wager may be deducted in response to the machine 100 receiving a play request from the player. For example, a player may have a player credit balance of 100,000, which may be reduced to 99,750 credits upon the player requesting a play of the game with a wager of 250 credits. In one example, the method may further involve the machine 100 displaying on the display 110 the player credit balance and/or the wager amount.

At block 302, the method may involve the machine 100 receiving a play request (e.g., a "spin" request) via the user interface 104. In one example, this may allow a player to pull a level or push a button on the machine 100 to request a play of the wager game. As noted above, this may result in the player's credit balance being reduced by the player's wager.

At block 304, the method may involve the machine 100 making a determination that a trigger event occurred. The trigger event may be a randomly occurring event. For example, the trigger event occurring may involve the machine 100 selecting a trigger symbol from a group of symbols, such as in connection with a previous play of the game. In another example, the trigger event occurring may involve the machine 100 selecting a trigger symbol for display in a particular arrangement position (e.g., in a middle row or a middle column). As yet another example, the trigger event may involve the machine 100 selecting, using a random number generator, a number in response to the machine 100 receiving the play request, where the selected number is a trigger number. Note that while a few example trigger events have been described above, any of a variety of other trigger events could be used to suit a desired configuration.

At block 306, the method may involve responsive to the machine 100 making the determination, the machine 100 (i) selecting a precursor symbol set from a precursor symbol group, and (ii) for the or each symbol in the selected precursor symbol set, randomly determining a corresponding arrangement position.

The precursor symbol group may include one or more symbols, such as a Wild or a Joker that may be used in connection with the wager game. The precursor symbol group may be customized with particular symbols as desired.

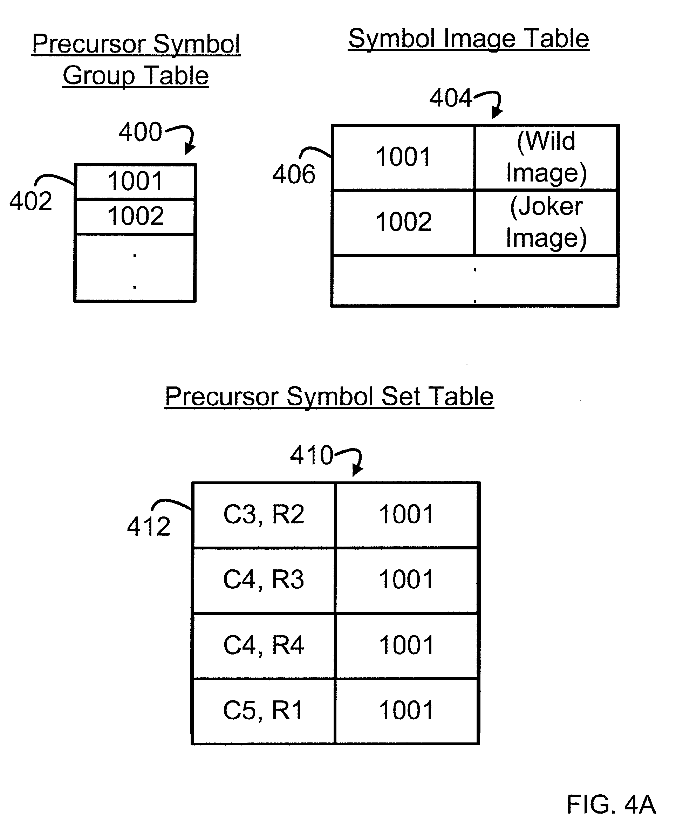

In one example, the precursor symbol group may be represented as a table (or other data structure) stored in the data storage 114. Figure 4a shows an example precursor symbol group table 400. The precursor symbol group table 400 includes multiple records 402, each including an identifier that represents a particular symbol.

The precursor symbol group table 400 may be used in connection with a symbol image table 404. The symbol image table 404 includes multiple records 406, each including an identifier that represents a particular symbol, and a corresponding displayable image. As such, the symbol image table 404 may be used to map an identifier in the precursor symbol group table 400 to a displayable image.

The selected precursor symbol set may be represented by a table 410. The table 410 includes multiple records 412, each including a corresponding arrangement position of the respective symbol, and a corresponding identifier that represents the respective symbol. As such, each symbol in the selected precursor symbol set may correspond with a respective arrangement position for a given arrangement (e.g., both a column number and row number in a column-and-row arrangement).

The precursor symbol set includes a quantity of symbols that is less than the quantity of arrangement positions in the arrangement.

In one example, the machine 100 selecting the precursor symbol set from the precursor symbol group involves the machine 100 determining a quantity of symbols in the precursor symbol set. In an example where the arrangement is a column-and-row arrangement, the machine 100 may determine this quantity as being the number of rows in the arrangement. As such, in an example where the arrangement has five columns and four rows, the machine 100 may determine that the precursor symbol set has a quantity of four symbols. The machine 100 may then select four symbols from the precursor symbol group.

In one example, the machine 100 may select the precursor symbol set by iterating though each record 412 in the precursor symbol set table 410, and select a symbol identifier from among the symbol identifiers in the precursor symbol group table 400. In one example, the symbol identifiers are numbers and the machine 100 uses a random number generator to select such numbers, and therefore to randomly select symbols.

In another example, the precursor symbol set may be predetermined (i.e., before the determination that the trigger event occurred is made).

As noted above, for the or each symbol in the selected precursor symbol set, the method further involves the machine 100 randomly determining a corresponding arrangement position. As such, in an example where the arrangement is a column-and-row arrangement, the machine 100 may randomly determine a column identifier and a row identifier (from a set of potential column identifier and row identifier combinations) for each symbol in the precursor symbol set.

In some instances, one or more of such arrangement positions may be partially restricted. For instance, in an example where the arrangement has five columns and four rows, and where the precursor symbol includes four symbols, the corresponding arrangement positions may be partially restricted such that each symbol in the precursor symbol set corresponds with an arrangement position for a different one of the rows.

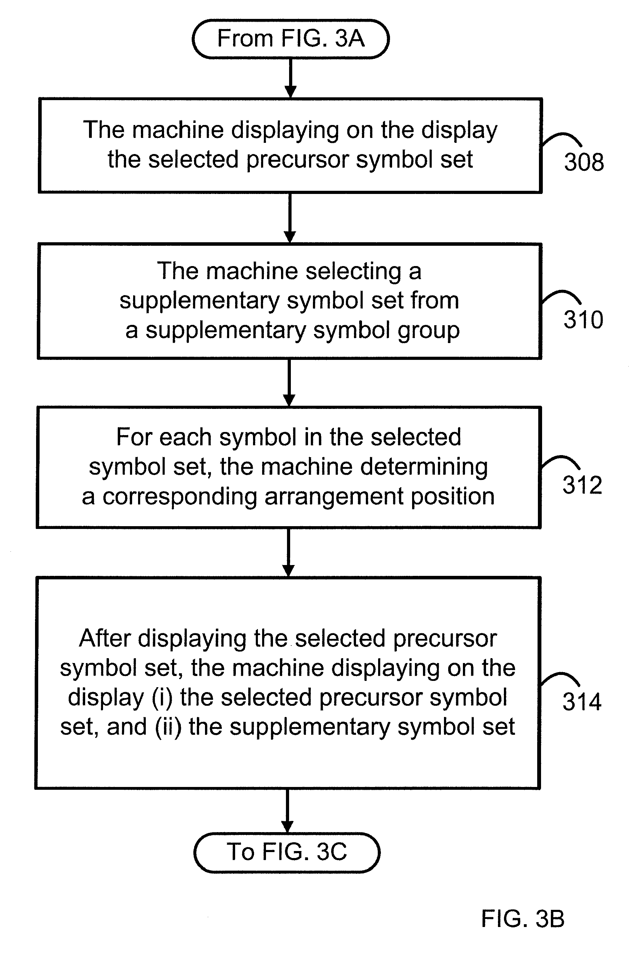

Turning to Figure 3B, at block 308, the method may involve the machine 100 displaying on the display 110 the selected precursor symbol set by displaying the or each symbol in the selected precursor symbol set in the corresponding arrangement position for that symbol.

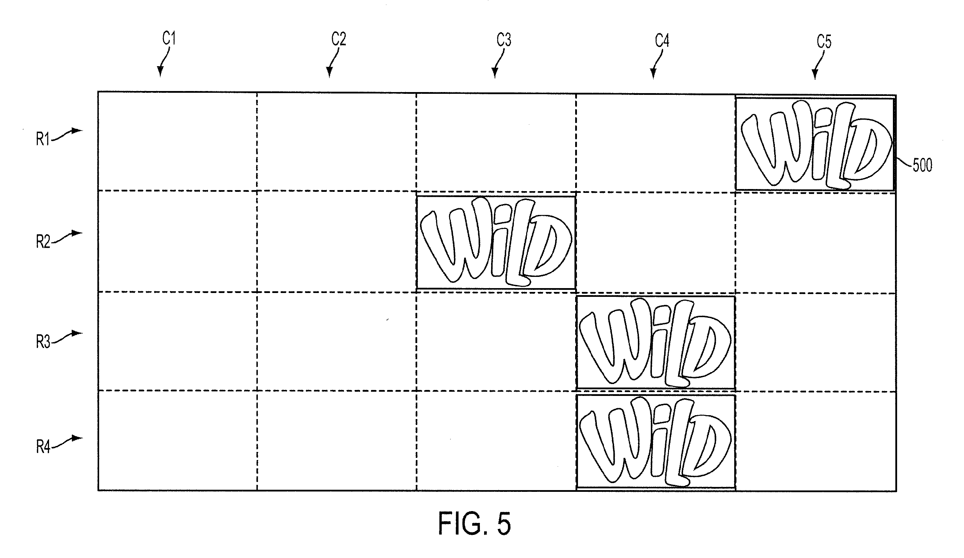

Figure 5 shows an example of a precursor symbol set 500 displayed on the display 110. The displayed precursor symbol set 500 includes four Wild symbols arranged within an arrangement having five columns C1-C5 and four rows R1-R4. As shown, each of the four symbols of the precursor symbol set 500 are displayed in the arrangement at positions C3,R2; C4,R3; C4,R4; and C5,R1, respectively. Note that for clarity in Figure 5, the reference number 500 is shown in connection with only one of the Wild symbols.

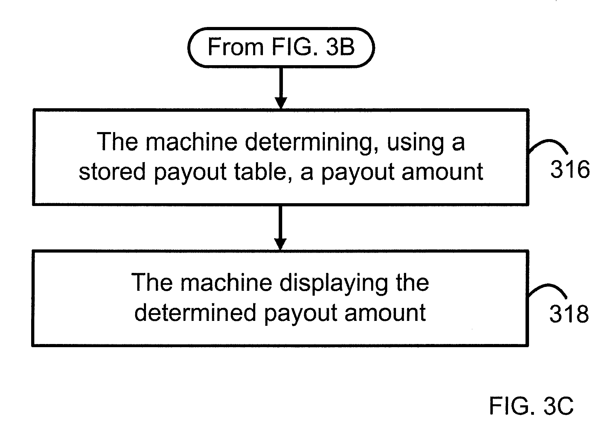

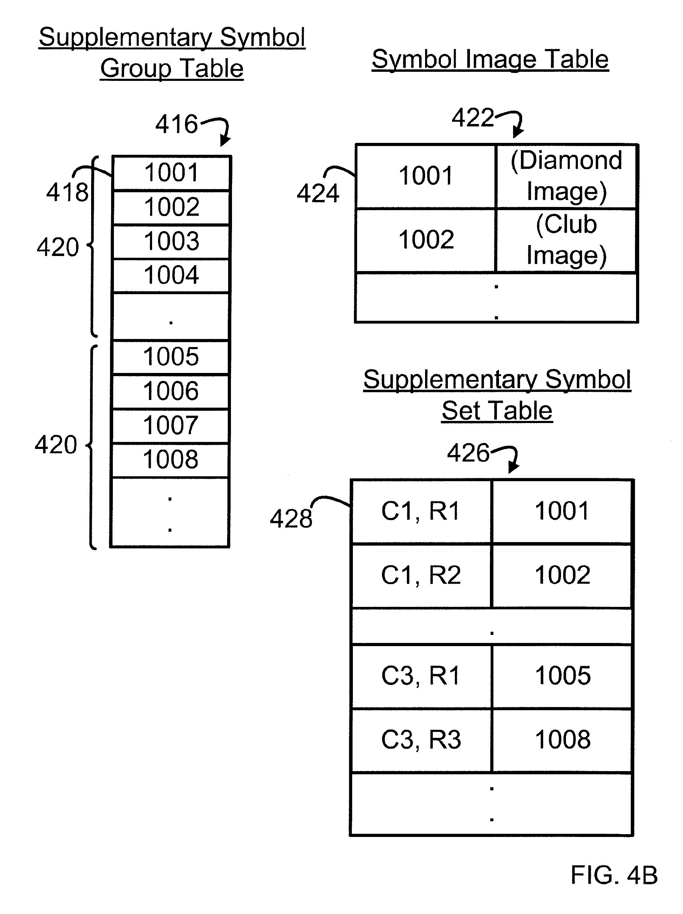

Returning to Figure 3, at block 310, the method may involve the machine 100 selecting a supplementary symbol set (600) from a supplementary symbol group. The supplementary symbol group includes multiple symbols, such as a Club, a Diamond, a Heart, a Spade, a Santa, or a Roast Turkey, that may be used in connection with the wager game. The supplementary symbol group may be customized with particular symbols as desired. In one example, the supplementary symbol group may be represented as a table (or other data structure) stored in the data storage 114. Figure 4B shows an example supplementary symbol group table 416. The precursor symbol group table 416 includes multiple records 418, each including an identifier that represents a particular symbol. In one example, the supplementary symbol group, and therefore the supplementary symbol table 418, may be divided into multiple sub-groups 420 as discussed in greater detail below.

The supplementary symbol group table 416 may be used in connection with a symbol image table 422. As with the symbol image table 404 described above, the symbol image table 422 includes multiple records 424, each including an identifier that represents a particular symbol, and a corresponding displayable image. As such, the symbol image table 422 may be used to map an identifier in the supplementary symbol group table 416 to a displayable image.

The selected supplementary symbol set may be represented by a table 426. The table 426 includes multiple records 428, each including an arrangement position of the symbol, and an identifier that represents the symbol. As such, each symbol in the selected precursor symbol set may correspond with a respective arrangement position in an arrangement (e.g., both a column identifier and row identifier in a column-and-row arrangement).

In one example, the machine 100 selecting the precursor symbol set from the precursor symbol group involves the machine 100 determining a quantity of symbols in the precursor symbol set. As noted above, the precursor symbol set includes a quantity of symbols that is less than the quantity of arrangement positions in the arrangement. Notably, the quantity of symbols in the supplementary symbol set makes up this difference. As such, the machine 100 may determine the quantity of symbols in the supplementary symbol as being the quantity of arrangement positions in the arrangement less the quantity of symbols in the precursor symbol set.

In one example, the machine 100 may select the supplementary symbol set by iterating though each record 428 in the supplementary symbol set table 426, and selecting a symbol identifier from among the symbol identifiers in the supplementary symbol group table 416. In one example, the symbol identifiers are numbers and the machine 100 uses a random number generator to select such numbers, and therefore to randomly select symbols.

In some embodiments, the precursor symbol group is a proper subset of the supplementary symbol group. As such, the selected precursor symbol set and the selected supplementary symbol set may include the same symbol. And in some embodiments, the precursor symbol group and the supplementary symbol group may be combined into the same group.

In one example, the machine 100 may select each sub-set in the supplementary symbol set from the corresponding sub-group in the supplementary symbol group. This type of selection may be used when the sub-groups represent one or more reels in a reel-type wager game. In this instance, each sub-group includes all the symbols of a given reel, and the selected sub-set includes the symbols of the reel that are "in play."

At block 312, the method may involve for the or each symbol in the selected supplementary symbol set, determining a corresponding arrangement position.

In some instances, one or more of such arrangement positions may be partially restricted. For instance, the corresponding arrangement positions may be partially restricted such that the determined arrangement position does not already correspond to a symbol in either the precursor symbol set or in the supplementary symbol set. In one example, the machine 100 may determine arrangement positions randomly in view of these partial restrictions.

Once the function at block 312 is complete, each arrangement position in the arrangement corresponds with exactly one symbol, namely one that is in either the selected precursor symbol set or the selected supplementary symbol set.

At block 314, the method may involve after displaying the selected precursor symbol set, the machine 100 displaying on the display 110 (i) the selected precursor symbol set, and (ii) the supplementary symbol set by displaying the or each symbol in the selected supplementary symbol set in the corresponding arrangement position for that symbol.

In one example, the machine 100 may display the selected supplementary symbol set by displaying the displayable image associated with each symbol in the selected supplementary symbol set (e.g., according to the symbol image table 422).

In one example, the machine 100 may display the supplementary symbol set by displaying each symbol in the selected first symbol set according to the corresponding arrangement position.

Further, where the column and row arrangement is used to simulate reels, the machine 100 may display the each sub-set in a corresponding column, such as by superimposing each sub-set over a virtual reel in a corresponding column.

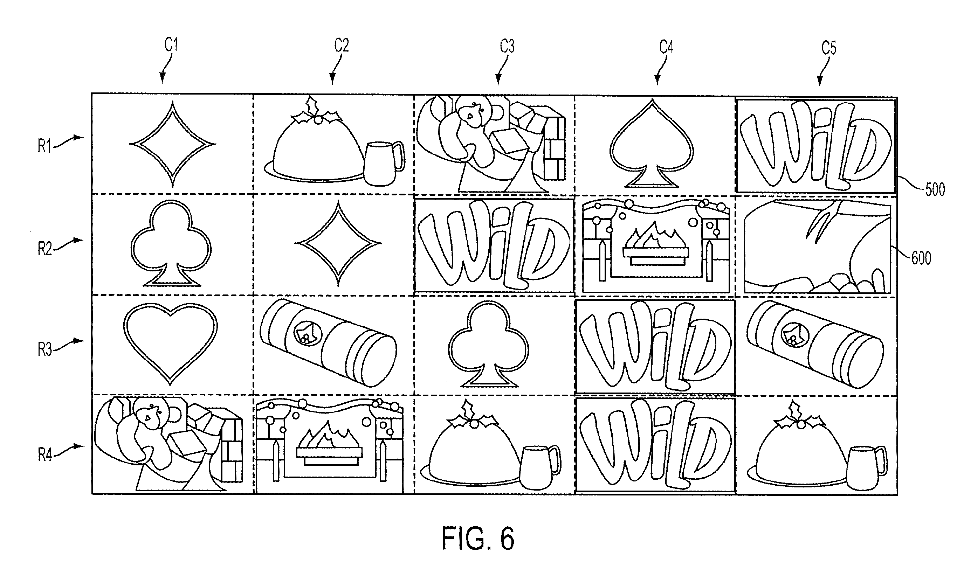

Figure 6 shows an example of the displayed precursor symbol set 500 combined with a displayed supplementary symbol set 600, as displayed on the display 110. Note that for clarity in Figure 6, the reference number 600 is shown in connection with only one of the symbols in the supplementary symbol set.

Turning to Figure 3C, at block 316, the method may involve the machine 100 determining, using a stored payout table, a payout amount. The payout amount may be a function of the received wager, the precursor symbol set, the supplementary symbol set, and/or the corresponding arrangements of symbols in the precursor and supplementary symbol sets. In one example, the stored payout table may map symbol sets and/or particular arrangements to a payout multiplier. As such, the received wager may be multiplied by the appropriate payout multiplier to determine the payout amount.

In one example, the machine 100 may also physically dispense a corresponding payout (e.g., cash), or otherwise facilitate the payout to the player (by adding funds to an electronic account associated with a gaming card). Additionally or alternatively to determining the payout amount, the machine 100 may perform other actions to award the player. For instance, the machine may display an indication of a tangible prize. Other types of awards may be used as well.

At block 318, the method may involve the machine 100 displaying on the display 110 the determined payout amount. For example, where the machine 100 has determined, using the stored payout table, a payout amount of 500 credits, the machine may display on the display 110 the determined payout amount of 500 credits. Additionally or alternatively, the machine may add the determined payout amount to the player credit balance and display the updated player credit balance. For instance, where the player credit balance was 99,750 credits before the payout amount was determined, the machine 100 may add the determined payout amount of 500 credits to the player credit balance so that the updated balance is 100,250 credits.

The method may also involve the machine 100 displaying on the display 110 an indication of one or more of the symbols in the precursor symbol set or the supplementary symbol set. In one example, the machine 100 may display such an indication by highlighting, shading, hatching or adding a border around the symbols, but other indication techniques may be used.

In one example, the machine 100 selecting the precursor symbol set occurs before the machine selecting the supplementary symbol set. However, the machine 100 may also select the precursor symbol set at the same time as or after selecting the supplementary symbol set.

In one example where the game emulates a reel-type game, the display 110 shows the symbols in the precursor set moving while the game simulates a spin of the reels. This may give the appearance to the player that positions corresponding to the symbols in the selected precursor symbol set are being randomly determined. For instance, where each row has a corresponding symbol in the precursor symbol set, each symbol in the precursor symbol set may move left and right across the row until it eventually "locks" into place in a particular arrangement position.

In some embodiments, the game feature described above may be one of multiple game features of a given game. In some instances, the machine 100 may make a determination that a trigger event occurred (e.g., based on a random selection as described above). And in response to making the determination, the machine 100 may randomly select a game feature from a group of game features. Further, in response to selecting the game feature, the machine may perform the appropriate steps to execute the selected game feature. For example, where the game feature is the one described above, in response to selecting the game feature, the machine 100 may make the determination as described above at block 300, and then perform one or more of the other functions described herein in connection with Figures 3A-3C to execute the game feature. Note that the group of game features may include a variety of different types of game features.

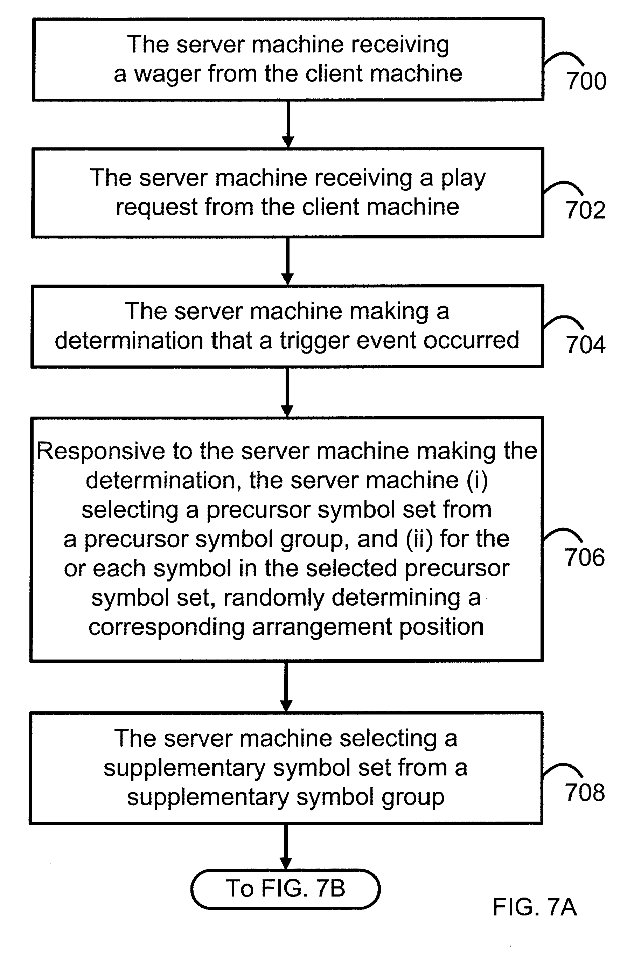

Figures 7A-7B show a flow chart showing functions in accordance with an example method in connection with the server machine 100a. Note that several of the functions described in connection with Figures 7A-7B parallel functions described in connection with Figures 3A-3C. As such, variations of the functions described in connection with Figures 3A-3C are likewise applicable to the functions described in connection with Figures 7A-7B. However, for the sake of brevity, these variations are not repeated.

At block 700, the method may involve the server machine 100a receiving a wager from the client machine 100b.

At block 702, the method may involve the server machine 100a receiving a play request from the client machine 100b.

At block 704, the method may involve the server machine 100a making a determination that a trigger event occurred.

At block 706, the method may involve responsive to the server machine 100a making the determination, the server machine (i) selecting a precursor symbol set from a precursor symbol group, and (ii) for the or each symbol in the selected precursor symbol set, randomly determining a corresponding arrangement position. At block 708, the method may involve the server machine 110a selecting a supplementary symbol set from a supplementary symbol group.

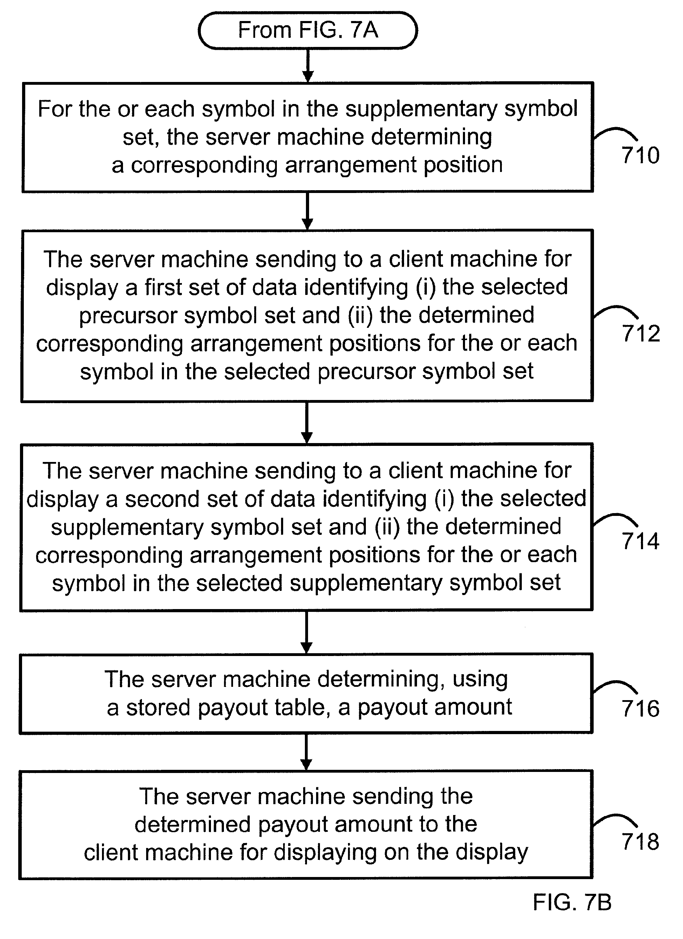

Turning to Figure 7B, at block 710, the method may involve for the or each symbol in the selected supplementary symbol set, the server machine 100a determining a corresponding arrangement position.

At block 712, the method may involve the server machine 100a sending to a client machine 100b for display a first set of data identifying (i) the selected precursor symbol set and (ii) the determined corresponding arrangement positions for the or each symbol in the selected precursor symbol set.

At block 714, the method may involve the server machine 110a sending to the client machine 100b for display a second set of data identifying (i) the selected supplementary symbol set, and (ii) the determined corresponding arrangement positions for the or each symbol in the selected supplementary symbol set.

At block 716, the method may involve the server machine 100a determining, using the stored payout table, a payout amount.

At block 718, the method may involve the server machine 100a sending the determined payout amount to the client machine 100b for display on the display 110b.

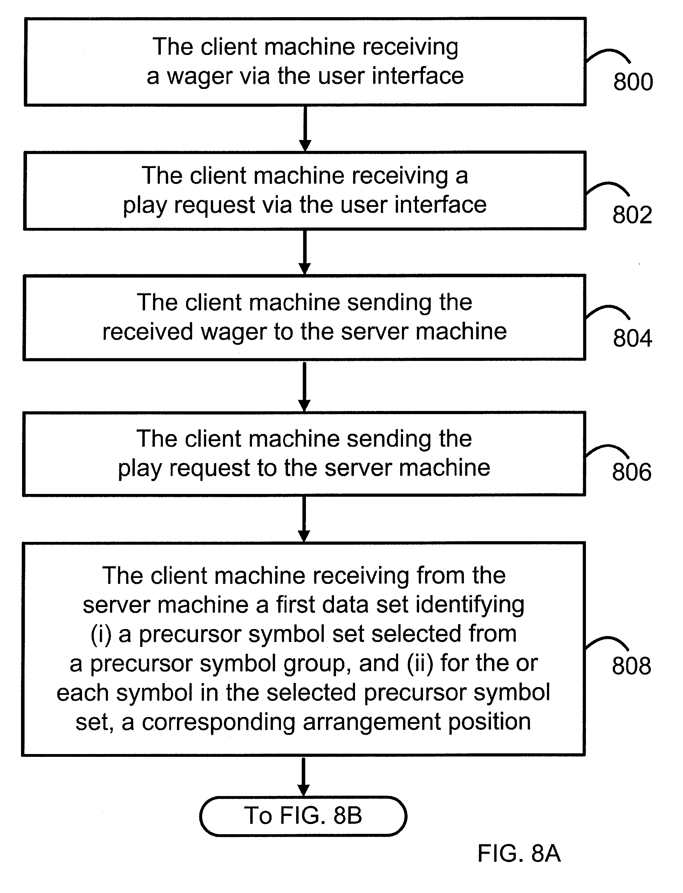

Figures 8A-8B show a flow chart showing functions in accordance with an example method in connection with the client machine 100b. Note that several of the functions described in connection with Figures 8A-8B parallel functions described in connection with Figures 3A-3C and 7A-7B. As such, variations of the functions described in connection with Figures 3A-3C and 7A-7B are likewise applicable to the functions described in connection with Figures 8A-8B. However, for the sake of brevity, these variations are not repeated.

At block 800, the method may involve the client machine 100b receiving a wager via the user interface 104b.

At block 802, the method may involve the client machine 100b receiving a play request via the user interface 104b.

At block 804, the method may involve the client machine 100b sending the received wager to the server machine 100a.

At block 806, the method may involve the client machine 100b sending the play request to the server machine 100a.

At block 808, the method may involve the client machine 100b receiving from the server machine 100a a first set of data identifying (i) a precursor symbol set selected from a precursor symbol group, and (ii) for the or each symbol in the selected precursor symbol set, a corresponding arrangement position.

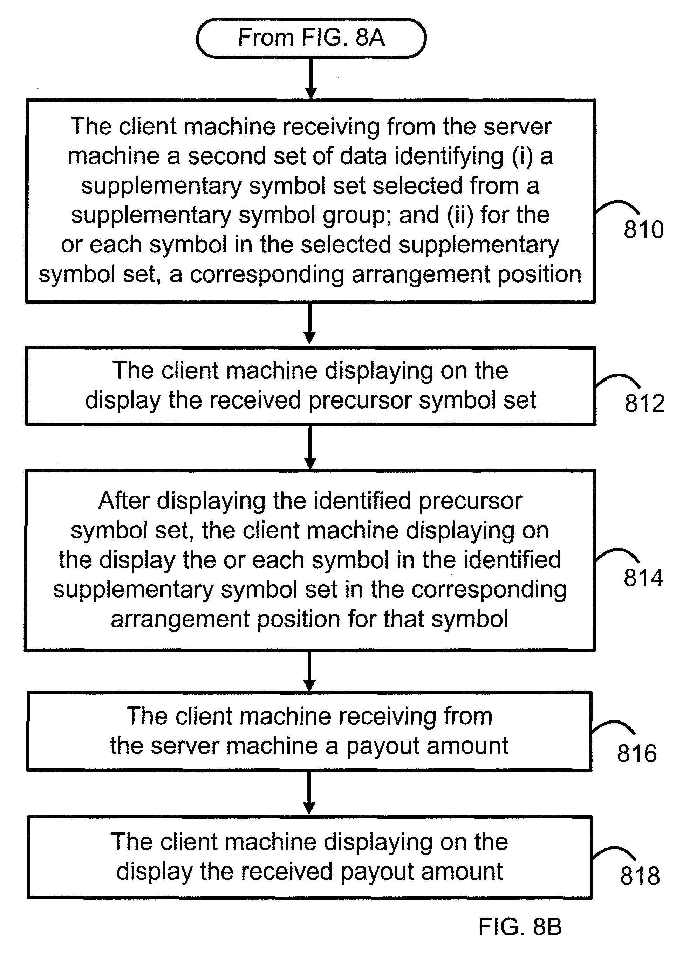

Turning to Figure 8B, at block 810, the method may involve the client machine 100b receiving from the server machine 100a a second set of data identifying (i) a supplementary symbol set selected from a supplementary symbol group; and (ii) for the or each symbol in the selected supplementary symbol set, a corresponding arrangement position

At block 812, the method may involve the client machine 100b displaying on the display 110b the identified precursor symbol set by displaying the or each symbol in the identified precursor symbol set in the identified corresponding arrangement position for that symbol.

At block 814, the method may involve after displaying the identified precursor symbol set, the client machine 100b displaying on the display 110b (i) the identified precursor symbol set, and (ii) the identified supplementary symbol set by displaying the or each symbol in the identified supplementary symbol set in the identified corresponding arrangement position for that symbol.

At block 816, the method may involve the client machine 100b receiving from the server machine 100a a payout amount, responsive to sending the received wager to the server machine 100a. In one example, the second payout amount may be a function of the received wager, the identified precursor symbol set, the identified supplementary symbol set, an arrangement of the symbols in the identified precursor symbol set, and/or an arrangement of the symbols in the identified supplementary symbol set.

At block 818, the method may involve the client machine 100b displaying on the display 110a the received payout amount.

The following examples set out further or alternative aspects of the disclosure. The references to items in Figures or to Figures are for ease of reference only and are not limiting on the scope of the disclosures in accordance with these various aspects.
1. A machine (100) comprising: a display (110) configured to display symbols in a game; a processor (112); and a non-transitory computer-readable medium storing program instructions, that when executed by the processor (112), cause a set of functions to be performed, the set of functions comprising:
   making a determination that a trigger event occurred;
   responsive to making the determination, (i) selecting a precursor symbol set (500) from a precursor symbol group, and (ii) for the or each symbol in the selected precursor symbol set (500), randomly determining a corresponding arrangement position;
   displaying on the display (110) the selected precursor symbol set (500) by displaying the or each symbol in the selected precursor symbol set (500) in the corresponding arrangement position for that symbol;
   selecting a supplementary symbol set (600) from a supplementary symbol group;
   for the or each symbol in the selected supplementary symbol set (600), determining a corresponding arrangement position; and
   after displaying the selected precursor symbol set (500), displaying on the display (110) (i) the selected precursor symbol set (500), and (ii) the supplementary symbol set by displaying the or each symbol in the selected supplementary symbol set (500) in the corresponding arrangement position for that symbol. (Figures 1, 3A-3C, 5, and 6).
2. The machine (100) as recited in example 1, wherein the trigger event comprises a randomly occurring event. (Figures 1, 3A-3C, 5, and 6).
3. The machine (100) as recited in example 1 or 2, wherein the trigger event comprises selecting a trigger symbol. (Figures 1, 3A-3C, 5, and 6).
4. The machine (100) as recited in one of examples 1-3, wherein selecting the precursor symbol set (500) from the precursor symbol group comprises determining a quantity of symbols in the precursor symbol set (500). (Figures 1, 3A-3C, 5, and 6).
5. The machine (100) as recited in one of examples 1-4, wherein selecting the precursor symbol set occurs before selecting the supplementary symbol set. (Figures 1, 3A-3C, 5, and 6).
6. The machine (100) as recited in one of examples 1-5, wherein the precursor symbol group is a proper subset of the supplementary symbol group. (Figures 1, 3A-3C, 5, and 6).
7. The machine (100) as recited in one of examples 1-6, wherein selecting the supplementary symbol set (600) from the supplementary symbol group comprises determining a quantity of symbols in the supplementary symbol set (600). (Figures 1, 3A-3C, 5, and 6).
8. The machine (100) as recited in one of examples 1-7, wherein selecting the precursor symbol set (600) occurs after selecting the supplementary symbol set (500). (Figures 1, 3A-3C, 5, and 6).
9. The machine (100) as recited in one of examples 1-8, wherein the precursor symbol group and the supplementary symbol group are the same group. (Figures 1, 3A-3C, 5, and 6).
10. The machine (100) as recited in example 4, wherein the or each symbol in the selected precursor symbol set (500) corresponds with a respective arrangement position in a column-and-row arrangement, and wherein determining the quantity of symbols in the precursor symbol set (500) comprises determining the number of rows in the column-and-row arrangement. (Figures 1, 3A-3C, 5, and 6).
11. The machine (100) as recited in example 10, wherein determining the quantity of symbols in the precursor symbol set (500) comprises subtracting the quantity of symbols in the selected precursor symbol set from the quantity of arrangement positions in the column-and-row arrangement. (Figures 1, 3A-3C, 5, and 6).
12. The machine (100) as recited in one of examples 1-10, wherein the or each symbol in the selected precursor symbol set (500) corresponds with a respective arrangement position in a column-and-row arrangement, and wherein the or each symbol in the selected supplementary symbol set (600) corresponds with a respective arrangement position in the column-and-row arrangement. (Figures 1, 3A-3C, 5, and 6).
13. The machine (100) as recited in example 12, wherein displaying the selected precursor symbol set (500) comprises displaying the or each symbol from the selected precursor symbol set (500) in the corresponding arrangement position for that symbol, and wherein displaying the selected supplementary symbol set (600) comprises displaying the or each symbol from the selected supplementary symbol set (600) in the corresponding arrangement position for that symbol. (Figures 1, 3A-3C, 5, and 6).
14. The machine (100) as recited in example 12 or 13, wherein a combined quantity of symbols in the selected precursor symbol set (500) and the selected supplementary symbol set (600) is twenty symbols, and wherein the column-and-row arrangement comprises five columns and four rows. (Figures 1, 3A-3C, 5, and 6).
15. The machine (100) as recited in one of examples 1-14, wherein the or each symbol in the precursor symbol group corresponds with a respective number from a set of numbers, and wherein selecting the precursor symbol set (500) from the precursor symbol group comprises using a random number generator to select numbers from the set of numbers to select symbols corresponding with the selected numbers. (Figures 1, 3A-3C, 5, and 6).
16. The machine (100) as recited in one of examples 1-14, wherein the precursor symbol group comprises a single symbol. (Figures 1, 3A-3C, 5, and 6).
17. The machine (100) as recited in one of examples 1-16, wherein the or each symbol in the supplementary symbol group corresponds with a respective number from a set of numbers, and wherein selecting the supplementary symbol set (600) from the precursor symbol group comprises using a random number generator to select numbers from the set of numbers to select symbols corresponding with the selected numbers. (Figures 1, 3A-3C, 5, and 6).
18. The machine (100) recited in one of examples 1-17, the set of functions further comprising:
   displaying on the display (110) an indication of the or each symbol in the precursor symbol set (500). (Figures 1, 3A-3C, 5, and 6).
19. The machine (100) recited in example 18, wherein displaying on the display (110) the indication of the or each symbol in the precursor symbol set (500) comprises highlighting the or each symbol in the precursor symbol set (500). (Figures 1, 3A-3C, 5, and 6).
20. The machine (100) recited in one of examples 1-19, the set of functions further comprising:
   displaying on the display (110) an indication of the or each symbol in the supplementary symbol set (600). (Figures 1, 3A-3C, 5, and 6).
21. The machine (100) recited in example 20, wherein displaying on the display (110) the indication of the or each symbol in the supplementary symbol set (600) comprises highlighting the or each symbol in the supplementary symbol set (600). (Figures 1, 3A-3C, 5, and 6).
22. The machine (100) recited in one of examples 1-21, wherein the selected supplementary symbol set (600) includes multiple sub-sets, wherein the supplementary symbol group includes multiple sub-groups, wherein each sub-set corresponds to a respective one of the sub-groups, and wherein selecting the supplementary symbol set (600) from the supplementary symbol group comprises selecting each sub-set from the corresponding sub-group. (Figures 1, 3A-3C, 5, and 6).
23. The machine (100) recited in one of examples 1-22, wherein the or each symbol in the selected precursor symbol set (500) corresponds with a respective displayable image, and wherein displaying the selected precursor symbol set (500) comprises for the or each symbol of the selected precursor symbol set (500), displaying a corresponding displayable image. (Figures 1, 3A-3C, 5, and 6).
24. The machine (100) as recited in one of examples 1-23, the set of functions further comprising:
   receiving a play request via a user interface, wherein making the determination occurs in response to receiving the play request. (Figures 1, 3A-3C, 5, and 6).
25. The machine (100) recited in one of examples 1-24, wherein a payout table is stored in the computer-readable medium, the set of functions further comprising:
   receiving a wager via a user interface; and
   determining, using the stored payout table, a payout amount, wherein the payout amount is a function of at least the received wager, the selected precursor symbol set (500), and the selected supplementary symbol set (600). (Figures 1, 3A-3C, 5, and 6).
26. The machine (100) recited in example 25, the set of functions further comprising:
   displaying on the display (110) the determined payout amount. (Figures 1, 3A-3C, 5, and 6).
27. The machine (100) recited in one of examples 1-26, wherein the display (110) is configured to display symbols in a wager game. (Figures 1, 3A-3C, 5, and 6).
28. A method comprising:
   a machine (100) making a determination that a trigger event occurred;
   responsive to the machine (100) making the determination, the machine (i) selecting a precursor symbol set (500) from a precursor symbol group, and (ii) for the or each symbol in the selected precursor symbol set (500), randomly determining a corresponding arrangement position;
   the machine (100) displaying on a display (110) the selected precursor symbol set (500) by displaying the or each symbol in the selected precursor symbol set (500) in the corresponding arrangement position for that symbol;
   the machine (100) selecting a supplementary symbol set (600) from a supplementary symbol group;
   for the or each symbol in the selected supplementary symbol set (600), the machine (100) determining a corresponding arrangement position; and
   after the machine (100) displaying the selected precursor symbol set (500), the machine (100) displaying on the display (110) (i) the selected precursor symbol set (500), and (ii) the supplementary symbol set by displaying the or each symbol in the selected supplementary symbol set (500) in the corresponding arrangement position for that symbol. (Figures 1, 3A-3C, 5, and 6).
29. The method as recited in example 28, wherein the trigger event comprises a randomly occurring event. (Figures 1, 3A-3C, 5, and 6).
30. The method as recited in example 28 or 29, wherein the trigger event comprises selecting a trigger symbol. (Figures 1, 3A-3C, 5, and 6).
31. The method as recited in one of examples 28-30, wherein selecting the precursor symbol set (500) from the precursor symbol group comprises determining a quantity of symbols in the precursor symbol set (500). (Figures 1, 3A-3C, 5, and 6).
32. The method as recited in one of examples 28-31, wherein selecting the precursor symbol set occurs before selecting the supplementary symbol set. (Figures 1, 3A-3C, 5, and 6).
33. The method as recited in one of examples 28-32, wherein the precursor symbol group is a proper subset of the supplementary symbol group. (Figures 1, 3A-3C, 5, and 6).
34. The method as recited in one of examples 28-33, wherein selecting the supplementary symbol set (600) from the supplementary symbol group comprises determining a quantity of symbols in the supplementary symbol set (600). (Figures 1, 3A-3C, 5, and 6).
35. The method as recited in one of examples 28-34, wherein selecting the precursor symbol set (600) occurs after selecting the supplementary symbol set (500). (Figures 1, 3A-3C, 5, and 6).
36. The method as recited in one of examples 28-35, wherein the precursor symbol group and the supplementary symbol group are the same group. (Figures 1, 3A-3C, 5, and 6).
37. The method as recited in example 31, wherein the or each symbol in the selected precursor symbol set (500) corresponds with a respective arrangement position in a column-and-row arrangement, and wherein determining the quantity of symbols in the precursor symbol set (500) comprises determining the number of rows in the column-and-row arrangement. (Figures 1, 3A-3C, 5, and 6).
38. The method as recited in example 37, wherein determining the quantity of symbols in the precursor symbol set (500) comprises subtracting the quantity of symbols in the selected precursor symbol set from the quantity of arrangement positions in the column-and-row arrangement. (Figures 1, 3A-3C, 5, and 6).
39. The method as recited in one of examples 28-37, wherein the or each symbol in the selected precursor symbol set (500) corresponds with a respective arrangement position in a column-and-row arrangement, and wherein the or each symbol in the selected supplementary symbol set (600) corresponds with a respective arrangement position in the column-and-row arrangement. (Figures 1, 3A-3C, 5, and 6).
40. The method as recited in example 39, wherein displaying the selected precursor symbol set (500) comprises displaying the or each symbol from the selected precursor symbol set (500) in the corresponding arrangement position for that symbol, and wherein displaying the selected supplementary symbol set (600) comprises displaying the or each symbol from the selected supplementary symbol set (600) in the corresponding arrangement position for that symbol. (Figures 1, 3A-3C, 5, and 6).
41. The method as recited in example 39 or 40, wherein a combined quantity of symbols in the selected precursor symbol set (500) and the selected supplementary symbol set (600) is twenty symbols, and wherein the column-and-row arrangement comprises five columns and four rows. (Figures 1, 3A-3C, 5, and 6).
42. The method as recited in one of examples 28-41, wherein the or each symbol in the precursor symbol group corresponds with a respective number from a set of numbers, and wherein selecting the precursor symbol set (500) from the precursor symbol group comprises using a random number generator to select numbers from the set of numbers to select symbols corresponding with the selected numbers. (Figures 1, 3A-3C, 5, and 6).
43. The method as recited in one of examples 28-41, wherein the precursor symbol group comprises a single symbol. (Figures 1, 3A-3C, 5, and 6).
44. The method as recited in one of examples 28-33, wherein the or each symbol in the supplementary symbol group corresponds with a respective number from a set of numbers, and wherein selecting the supplementary symbol set (600) from the precursor symbol group comprises using a random number generator to select numbers from the set of numbers to select symbols corresponding with the selected numbers. (Figures 1, 3A-3C, 5, and 6).
45. The method as recited in one of examples 28-34, further comprising:
   displaying on the display (110) an indication of the or each symbol in the precursor symbol set (500). (Figures 1, 3A-3C, 5, and 6).
46. The method as recited in example 45, wherein displaying on the display (110) the indication of the or each symbol in the precursor symbol set (500) comprises highlighting the or each symbol in the precursor symbol set (500). (Figures 1, 3A-3C, 5, and 6).
47. The method as recited in one of examples 28-46, further comprising:
   displaying on the display (110) an indication of the or each symbol in the supplementary symbol set (600). (Figures 1, 3A-3C, 5, and 6).
48. The method as recited in example 47, wherein displaying on the display (110) the indication of the or each symbol in the supplementary symbol set (600) comprises highlighting the or each symbol in the supplementary symbol set (600). (Figures 1, 3A-3C, 5, and 6).
49. The method as recited in one of examples 28-48, wherein the selected supplementary symbol set (600) includes multiple sub-sets, wherein the supplementary symbol group includes multiple sub-groups, wherein each sub-set corresponds to a respective one of the sub-groups, and wherein selecting the supplementary symbol set (600) from the supplementary symbol group comprises selecting each sub-set from the corresponding sub-group. (Figures 1, 3A-3C, 5, and 6).
50. The method as recited in one of examples 28-49, wherein the or each symbol in the selected precursor symbol set (500) corresponds with a respective displayable image, and wherein displaying the selected precursor symbol set (500) comprises for the or each symbol of the selected precursor symbol set (500), displaying a corresponding displayable image. (Figures 1, 3A-3C, 5, and 6).
51. The method as recited in one of examples 28-50, further comprising:
   receiving a play request via a user interface, wherein making the determination occurs in response to receiving the play request. (Figures 1, 3A-3C, 5, and 6).
52. The method as recited in one of examples 28-51, wherein a payout table is stored in the computer-readable medium, further comprising:
   receiving a wager via a user interface;
   determining, using the stored payout table, a payout amount, wherein the payout amount is a function of at least the received wager, the selected precursor symbol set (500), and the selected supplementary symbol set (600). (Figures 1, 3A-3C, 5, and 6).
53. The method as recited in example 52, the further comprising:
   displaying on the display (110) the determined payout amount. (Figures 1, 3A-3C, 5, and 6).
54. The method as recited in one of examples 28-53, wherein the display (110) is configured to display symbols in a wager game. (Figures 1, 3A-3C, 5, and 6).
55. A server machine (100a) comprising: a processor (112a) and a non-transitory computer readable medium storing program instructions, that when executed by the processor (112a), cause a set of functions to be performed, the set of functions comprising:
   making a determination that a trigger event occurred;
   responsive to making the determination, (i) selecting a precursor symbol set (500) from a precursor symbol group, and (ii) for the or each symbol in the selected precursor symbol set (500), randomly determining a corresponding arrangement position;
   selecting a supplementary symbol set (600) from a supplementary symbol group;
   for the or each symbol in the selected supplementary symbol set (600), determining a corresponding arrangement position;
   sending to a client machine (100b) for display a first set of data identifying (i) the selected precursor symbol set (500) and (ii) the determined corresponding arrangement positions for the or each symbol in the selected precursor symbol set (500); and
   sending to the client machine (100b) for display a second set of data identifying (i) the selected supplementary symbol set (600), and (ii) the determined corresponding arrangement positions for the or each symbol in the selected supplementary symbol set (600). (Figures 2, 5, 6, 7A, and 7B).
56. The server machine (100a) as recited in example 55, wherein sending to the client machine (100b) for display the first set of data occurs while sending to the client machine (100b) for display the second set of data. (Figures 2, 5, 6, 7A, and 7B).
57. The server machine (100a) as recited in example 55 or 56, the set of functions further comprising sending to the client machine, an indication of the order in which the precursor symbol set and the supplementary symbol set are to be displayed. (Figures 2, 5, 6, 7A, and 7B).
58. The server machine (100a) recited in example 57, wherein the indication indicates that the precursor symbol set and the supplementary symbol set are to be displayed after the precursor set is displayed. (Figures 2, 5, 6, 7A, and 7B).
59. The server machine (100a) as recited in one of examples 55-58, wherein the trigger event comprises a randomly occurring event. (Figures 2, 5, 6, 7A, and 7B).
60. The server machine (100a) as recited in one of examples 55-59, wherein the trigger event comprises selecting a trigger symbol. (Figures 2, 5, 6, 7A, and 7B).
61. The server machine (100a) as recited in one of examples 55-60, wherein selecting the precursor symbol set (500) from the precursor symbol group comprises determining a quantity of symbols in the precursor symbol set (500). (Figures 2, 5, 6, 7A, and 7B).
62. The server machine (100a) as recited in one of examples 55-61, wherein selecting the precursor symbol set occurs before selecting the supplementary symbol set. (Figures 2, 5, 6, 7A, and 7B).
63. The server machine (100a) as recited in one of examples 55-62, wherein the precursor symbol group is a proper subset of the supplementary symbol group. (Figures 2, 5, 6, 7A, and 7B).
64. The server machine (100a) as recited in one of examples 55-63, wherein selecting the supplementary symbol set (600) from the supplementary symbol group comprises determining a quantity of symbols in the supplementary symbol set (600). (Figures 2, 5, 6, 7A, and 7B).
65. The server machine (100a) as recited in one of examples 55-64, wherein selecting the precursor symbol set (600) occurs after selecting the supplementary symbol set (500). (Figures 2, 5, 6, 7A, and 7B).
66. The server machine (100a) as recited in one of examples 55-65, wherein the precursor symbol group and the supplementary symbol group are the same group. (Figures 2, 5, 6, 7A, and 7B).
67. The server machine (100a) as recited in one of examples 55-66, wherein the or each symbol in the selected precursor symbol set (500) corresponds with a respective arrangement position in a column-and-row arrangement, and wherein determining the quantity of symbols in the precursor symbol set (500) comprises determining the number of rows in the column-and-row arrangement. (Figures 2, 5, 6, 7A, and 7B).
68. The server machine (100a) as recited in example 67, wherein determining the quantity of symbols in the precursor symbol set (500) comprises subtracting the quantity of symbols in the selected precursor symbol set from the quantity of arrangement positions in the column-and-row arrangement. (Figures 2, 5, 6, 7A, and 7B).
69. The server machine (100a) as recited in one of examples 55-67, wherein the or each symbol in the selected precursor symbol set (500) corresponds with a respective arrangement position in a column-and-row arrangement, and wherein the or each symbol in the selected supplementary symbol set (600) corresponds with a respective arrangement position in the column-and-row arrangement. (Figures 2, 5, 6, 7A, and 7B).
70. The server machine (100a) as recited in example 68 or 69, wherein a combined quantity of symbols in the selected precursor symbol set (500) and the selected supplementary symbol set (600) is twenty symbols, and wherein the column-and-row arrangement comprises five columns and four rows. (Figures 2, 5, 6, 7A, and 7B).
71. The server machine (100a) as recited in one of examples 55-70, wherein the or each symbol in the precursor symbol group corresponds with a respective number from a set of numbers, and wherein selecting the precursor symbol set (500) from the precursor symbol group comprises using a random number generator to select numbers from the set of numbers to select symbols corresponding with the selected numbers. (Figures 2, 5, 6, 7A, and 7B).
72. The server machine (100a) as recited in one of examples 55-70, wherein the precursor symbol group comprises a single symbol. (Figures 2, 5, 6, 7A, and 7B).
73. The server machine (100a) as recited in one of examples 55-72, wherein the or each symbol in the supplementary symbol group corresponds with a respective number from a set of numbers, and wherein selecting the supplementary symbol set (600) from the precursor symbol group comprises using a random number generator to select numbers from the set of numbers to select symbols corresponding with the selected numbers. (Figures 2, 5, 6, 7A, and 7B).
74. The server machine (100a) recited in one of examples 55-73, wherein the selected supplementary symbol set (600) includes multiple sub-sets, wherein the supplementary symbol group includes multiple sub-groups, wherein each subset corresponds to a respective one of the sub-groups, and wherein selecting the supplementary symbol set (600) from the supplementary symbol group comprises selecting each sub-set from the corresponding sub-group. (Figures 2, 5, 6, 7A, and 7B).
75. The server machine (100a) recited in one of examples 55-74, wherein the or each symbol in the selected precursor symbol set (500) corresponds with a respective displayable image. (Figures 2, 5, 6, 7A, and 7B).
76. The server machine (100a) as recited in one of examples 55-75, the set of functions further comprising:
   receiving a play request from the client machine (100b), wherein making the determination occurs in response to receiving the play request. (Figures 2, 5, 6, 7A, and 7B).
77. The server machine (100) recited in one of examples 55-76, wherein a payout table is stored in the computer-readable medium, the set of functions further comprising:
   receiving a wager from the client machine (100b); and
   determining, using the stored payout table, a payout amount, wherein the payout amount is a function of at least the received wager, the selected precursor symbol set (500), and the selected supplementary symbol set (600). (Figures 2, 5, 6, 7A, and 7B).
78. A client machine (100b) comprising: a display (110b) configured to display symbols in a game; a processor (112b); and a non-transitory computer readable medium storing program instructions, that when executed by the processor (112b), cause a set of functions to be performed, the set of functions comprising:
   receiving from a server machine (100a) (i) a first set of data identifying (i) a precursor symbol set (500) selected from a precursor symbol group, and (ii) for the or each symbol in the selected precursor symbol set (500), a corresponding arrangement position;
   receiving from the server machine (100a) a second set of data identifying (i) a supplementary symbol set (600) selected from a supplementary symbol group; and (ii) for the or each symbol in the selected supplementary symbol set (600), a corresponding arrangement position;
   displaying on the display (110b) the identified precursor symbol set (500) by displaying the or each symbol in the identified precursor symbol set (500) in the identified corresponding arrangement position for that symbol; and
   after displaying the identified precursor symbol set (500), displaying on the display (110) (i) the identified precursor symbol set (500), and (ii) the identified supplementary symbol set by displaying the or each symbol in the identified supplementary symbol set (500) in the identified corresponding arrangement position for that symbol. (Figures 2, 5, 6, 8A, and 8B).
79. The client machine (100b) as recited in example 78, wherein the precursor symbol group is a proper subset of the supplementary symbol group. (Figures 2, 5, 6, 8A, and 8B).
80. The client machine (100b) as recited in example 78 or 79, wherein selecting the precursor symbol set (600) occurs after selecting the supplementary symbol set (500). (Figures 2, 5, 6, 8A, and 8B).
81. The client machine (100b) as recited in one of examples 78-80, wherein the precursor symbol group and the supplementary symbol group are the same group. (Figures 2, 5, 6, 8A, and 8B).
82. The client machine (100b) as recited in one of examples 78-81, wherein the or each symbol in the identified precursor symbol set (500) corresponds with a respective arrangement position in a column-and-row arrangement, and wherein the or each symbol in the identified supplementary symbol set (600) corresponds with a respective arrangement position in the column-and-row arrangement. (Figures 2, 5, 6, 8A, and 8B).
83. The client machine (100b) as recited in example 82, wherein a combined quantity of symbols in the identified precursor symbol set (500) and the identified supplementary symbol set (600) is twenty symbols, and wherein the column-and-row arrangement comprises five columns and four rows. (Figures 2, 5, 6, 8A, and 8B).
84. The client machine (100b) as recited in one of examples 78-83, wherein the precursor symbol group comprises a single symbol. (Figures 2, 5, 6, 8A, and 8B).
85. The client machine (100b) recited in one of examples 78-84, the set of functions further comprising:
   displaying on the display (110b) an indication of the or each symbol in the precursor symbol set (500). (Figures 2, 5, 6, 8A, and 8B).
86. The client machine (100b) recited in example 85, wherein displaying on the display (110b) the indication of the or each symbol in the precursor symbol set (500) comprises highlighting the or each symbol in the precursor symbol set (500). (Figures 2, 5, 6, 8A, and 8B).
87. The client machine (100b) recited in one of examples 78-86, the set of functions further comprising:
   displaying on the display (110b) an indication of the or each symbol in the supplementary symbol set (600). (Figures 2, 5, 6, 8A, and 8B).
88. The client machine (100b) recited in example 87, wherein displaying on the display (110b) the indication of the or each symbol in the supplementary symbol set (600) comprises highlighting the or each symbol in the supplementary symbol set (600). (Figures 2, 5, 6, 8A, and 8B).
89. The client machine (100b) recited in one of examples 78-88, wherein the identified supplementary symbol set (600) includes multiple sub-sets, wherein the supplementary symbol group includes multiple sub-groups, wherein each subset corresponds to a respective one of the sub-groups. (Figures 2, 5, 6, 8A, and 8B).
90. The client machine (100b) recited in one of examples 78-89, wherein the or each symbol in the selected precursor symbol set (500) corresponds with a respective displayable image, and wherein displaying the identified precursor symbol set (500) comprises for the or each symbol of the identified precursor symbol set (500), displaying a corresponding displayable image. (Figures 2, 5, 6, 8A, and 8B).
91. The client machine (100b) as recited in one of examples 78-90, the set of functions further comprising:
   sending a play request to the server machine (100a). (Figures 2, 5, 6, 8A, and 8B).
92. The client machine (100b) recited in one of examples 78-91, wherein a payout table is stored in the computer-readable medium, the set of functions further comprising:
   sending a wager to the server machine (100a);
   receiving from the server machine (110a) a payout amount, wherein the payout amount is a function of at least the sent wager, the identified precursor symbol set (500), and the identified supplementary symbol set (600);
   displaying on the display (110b) the received payout amount. (Figures 2, 5, 6, 8A, and 8B).
93. The client machine (100b) recited in one of examples 78-92, wherein the display (110b) is configured to display symbols in a wager game. (Figures 2, 5, 6, 8A, and 8B).

In general, currently there are no machines or methods that allow a player to play a game that involves selecting both a precursor symbol set and a supplementary symbol set, randomly determining arrangement positions for the symbols in the precursor symbol set, displaying the precursor symbol set according to the corresponding arrangements positions, and after displaying the precursor symbol set, displaying (i) the precursor symbol set and (ii) the supplementary symbol set according to the corresponding arrangement positions.

More particularly, currently, there are no machines or methods to provide a symbol-type game that involves making a determination that a trigger event occurred; responsive to making the determination, (i) selecting a precursor symbol set, and (ii) for the or each symbol in the selected precursor symbol set, randomly determining a corresponding arrangement position; displaying the selected precursor symbol set according to the corresponding arrangement positions; selecting a supplementary symbol set; for the or each symbol in the selected supplementary symbol set, determining a corresponding arrangement position; and after displaying the selected precursor symbol set, displaying (i) the selected precursor symbol set and (ii) the supplementary symbol set according to the corresponding arrangement positions.

While one or more functions of the presently disclosed method have been described as being performed by the certain entities (e.g., the machine 100, the server machine 100a, or the client machine 100b), one or more of the functions may be performed by any entity, including but not limited to those described herein. As such, while this disclosure includes examples in which the server machine 100a performs select functions and sends data to the client machine 100b, such that the client machine 100b may perform complementing functions and receive the data, variations may to those functions may be made while adhering to the general server-client dichotomy and the scope of the disclosed machines and methods.

For example, rather than the server machine 100a sending select data (e.g., a symbol set) to the client machine 100b, such that the client machine may generate and display appropriate images, the server machine 100a may itself generate the images and send them to the client machine 100b for display. Indeed, it will be appreciated by one of ordinary skill in the art that the "break point" between the server machine's functions and the client machine's functions may be varied with ease.

Further, the described functions throughout this application need not be performed in the disclosed order, although in some examples, the recited order may be preferred. Also, not all functions need to be performed to achieve the desired advantages of disclosed machines and methods, and therefore not all functions are required

While examples have been described in terms of select embodiments, alterations and permutations of these embodiments will be apparent to those of ordinary skill in the art. Other changes, substitutions, and alterations are also possible without departing from the disclosed machines and methods in their broader aspects as set forth in the following claims.

## Claims

1. A machine comprising: a display configured to display symbols in a game; a processor; and a computer-readable medium storing program instructions, that when executed by the processor, cause a set of functions to be performed, the set of functions comprising:
making a determination that a trigger event occurred;
responsive to making the determination, (i) selecting a precursor symbol set from a precursor symbol group, and (ii) for the or each symbol in the selected precursor symbol set, randomly determining a corresponding arrangement position;
displaying on the display the selected precursor symbol set by displaying the or each symbol in the selected precursor symbol set in the corresponding arrangement position for that symbol;
selecting a supplementary symbol set from a supplementary symbol group;
for the or each symbol in the selected supplementary symbol set, determining a corresponding arrangement position; and
after displaying the selected precursor symbol set, displaying on the display (i) the selected precursor symbol set, and (ii) the supplementary symbol set by displaying the or each symbol in the selected supplementary symbol set in the corresponding arrangement position for that symbol.

2. The machine as recited in claim 1, wherein the trigger event comprises selecting a trigger symbol.

3. The machine as recited in one of claims 1-2, wherein selecting the precursor symbol set from the precursor symbol group comprises determining a quantity of symbols in the precursor symbol set.

4. The machine as recited in one of claims 1-3, wherein the or each symbol in the selected precursor symbol set corresponds with a respective arrangement position in a column-and-row arrangement, and wherein the or each symbol in the selected supplementary symbol set corresponds with a respective arrangement position in the column-and-row arrangement.

5. The machine as recited in one of claims 1-4, wherein the or each symbol in the precursor symbol group corresponds with a respective number from a set of numbers, and wherein selecting the precursor symbol set from the precursor symbol group comprises using a random number generator to select numbers from the set of numbers to select symbols corresponding with the selected numbers.

6. The machine recited in one of claims 1-5, the set of functions further comprising:
displaying on the display an indication of the or each symbol in the precursor symbol set.

7. The machine recited in claim 6, wherein displaying on the display the indication of the or each symbol in the precursor symbol set comprises highlighting the or each symbol in the precursor symbol set.

8. The machine recited in one of claims 1-7, the set of functions further comprising:
displaying on the display an indication of the or each symbol in the supplementary symbol set.

9. The machine recited in one of claims 1-8, wherein the selected supplementary symbol set includes multiple sub-sets, wherein the supplementary symbol group includes multiple sub-groups, wherein each sub-set corresponds to a respective one of the sub-groups, and wherein selecting the supplementary symbol set from the supplementary symbol group comprises selecting each sub-set from the corresponding sub-group.

10. The machine recited in one of claims 1-9, wherein the or each symbol in the selected precursor symbol set corresponds with a respective displayable image, and wherein displaying the selected precursor symbol set comprises for the or each symbol of the selected precursor symbol set, displaying a corresponding displayable image.

11. The machine recited in one of claims 1-10, wherein a payout table is stored in the computer-readable medium, the set of functions further comprising:
receiving a wager via a user interface; and
determining, using the stored payout table, a payout amount, wherein the payout amount is a function of at least the received wager, the selected precursory symbol set, and the selected supplementary symbol set.

12. The machine recited in claim 11, the set of functions further comprising:
displaying on the display the determined payout amount.

13. A method comprising:
a machine making a determination that a trigger event occurred;
responsive to the machine making the determination, the machine (i) selecting a precursor symbol set from a precursor symbol group, and (ii) for the or each symbol in the selected precursor symbol set, randomly determining a corresponding arrangement position;
the machine displaying on a display the selected precursor symbol set by displaying the or each symbol in the selected precursor symbol set in the corresponding arrangement position for that symbol;
the machine selecting a supplementary symbol set from a supplementary symbol group;
for the or each symbol in the selected supplementary symbol set, the machine determining a corresponding arrangement position; and
after the machine displaying the selected precursor symbol set, the machine displaying on the display (i) the selected precursor symbol set, and (ii) the supplementary symbol set by displaying the or each symbol in the selected supplementary symbol set in the corresponding arrangement position for that symbol.

14. A server machine comprising: a processor and a computer readable medium storing program instructions, that when executed by the processor, cause a set of functions to be performed, the set of functions comprising:
making a determination that a trigger event occurred;
responsive to making the determination, (i) selecting a precursor symbol set from a precursor symbol group, and (ii) for the or each symbol in the selected precursor symbol set, randomly determining a corresponding arrangement position;
selecting a supplementary symbol set from a supplementary symbol group;
for the or each symbol in the selected supplementary symbol set, determining a corresponding arrangement position;
sending to a client machine for display a first set of data identifying (i) the selected precursor symbol set and (ii) the determined corresponding arrangement positions for the or each symbol in the selected precursor symbol set; and
sending to the client machine for display a second set of data identifying (i) the selected supplementary symbol set, and (ii) the determined corresponding arrangement positions for the or each symbol in the selected supplementary symbol set.

15. A client machine comprising: a display configured to display symbols in a game; a processor; and a computer readable medium storing program instructions, that when executed by the processor, cause a set of functions to be performed, the set of functions comprising:
receiving from a server machine (i) a first set of data identifying (i) a precursor symbol set selected from a precursor symbol group, and (ii) for the or each symbol in the selected precursor symbol set, a corresponding arrangement position;
receiving from the server machine a second set of data identifying (i) a supplementary symbol set selected from a supplementary symbol group; and (ii) for the or each symbol in the selected supplementary symbol set, a corresponding arrangement position;
displaying on the display the identified precursor symbol set by displaying the or each symbol in the identified precursor symbol set in the identified corresponding arrangement position for that symbol; and
after displaying the identified precursor symbol set, displaying on the display (i) the identified precursor symbol set, and (ii) the identified supplementary symbol set by displaying the or each symbol in the identified supplementary symbol set in the identified corresponding arrangement position for that symbol.
